# EUROPÄISCHE PATENTSCHRIFT

(11) **EP 2 287 689 B1**
(45) Veröffentlichungstag und Bekanntmachung des Hinweises auf die Patenterteilung: **14.11.2012**
(21) Anmeldenummer: 09009681.9
(22) Anmeldetag: 27.07.2009
(51) Int. Cl.: G05B 19/418, H04L 12/403, H04L 29/12, G06F 13/42

(54) **Vorrichtung und Verfahren zur Adressierung einer Slave-Einheit**
Apparatus and method for addressing a slave unit
Dispositif et procédé d'adressage d'une unité esclave

(43) Veröffentlichungstag der Anmeldung: 23.02.2011
(73) Patentinhaber: Ziehl-Abegg AG, 74653 Künzelsau (DE)
(72) Erfinder: Schultz, Karl-Heinz, 74670 Forchtenberg-Wohlmuthausen (DE)
(74) Vertreter: Jacoby, Georg

(56) Entgegenhaltungen:
- EP-A- 1 072 980
- EP-A- 1 320 222
- DE-A1- 4 428 502
- DE-A1- 10 233 978
- DE-C2- 4 404 962

## Beschreibung

### Gebiet der Erfindung

Die Erfindung betrifft eine dynamisch adressierbare Slave-Einheit, eine Master-Einheit zur Verwendung mit einer oder mehreren dynamisch adressierbaren Slave-Einheiten, und ein Verfahren zum dynamischen Adressieren von Slave-Einheiten.

### Hintergrund der Erfindung

Bussysteme verschiedenster Art sind im Stand der Technik seit Langem bekannt. Die vorliegende Erfindung befasst sich speziell mit Master-Slave-Bussystemen.

Bei vielen Master-Slave-Bussystemen sind die Slave-Einheiten des Systems durch die Master-Einheit individuell identifizierbar und ansprechbar. Dadurch ist eine Master-Einheit beispielsweise in der Lage, über eine bestimmte Slave-Einheit eine von dieser Slave-Einheit angesteuerte Systemkomponente zu betätigen, oder empfangene Meldungen einer bestimmten Slave-Einheit- und damit einer bestimmten Systemkomponente - zuzuordnen. Um eine solche Funktionalität zu gewährleisten, benötigt die Slave-Einheit zum Einen eine systemweit eindeutige Adresse; zum Anderen muss die eindeutige Adresse sowie die Zugehörigkeit der Slave-Einheit zu einer Systemkomponente oder ihre Position im Bussystem der Master-Einheit bekannt sein.

Konventionell wird dies beispielsweise erreicht, indem bei der Initialisierung eines Bussystems eine Adressier- oder Orientierungsphase durchgeführt wird. In dieser Phase werden den Slave-Einheiten zum Beispiel in einer bestimmten Reihenfolge Systemadressen zugeteilt, oder der Master-Einheit wird Gelegenheit gegeben, nacheinander gespeicherte Gerätekennungen von einzelnen Slave-Einheiten an verschiedenen Positionen abzufragen. Beispielsweise wird eine Adressvergabe an die Slave-Einheiten manuell durchgeführt, indem die vorhandenen Slaves in einer definierten Reihenfolge nacheinander einzeln an das Bussystem angeschlossen oder mittels eines manuell betätigten Schalters nacheinander einzeln zur Adressierung freigegeben werden: Weil nur eine definierte, manuell ausgewählte Slave-Einheit an die Busleitung angeschlossen bzw. zur Adressierung freigegeben ist, kann die Master-Einheit durch das Ausgeben eines - eigentlich an alle am Bussystem hängenden Slave-Einheiten gerichteten - Broadcast-Befehls auf dem Bus eine eindeutige Adresse an diese einzelne Slave-Einheit vergeben. Auf Grund der definierten Reihenfolge, in der die Slave-Einheiten adressiert werden, kennt die Master-Einheit nach der Adressvergabe auch die relative Position der einzelnen Slave-Einheiten im System.

Solche manuellen Verfahren sind jedoch nicht nur zeitaufwändig und lästig, sondern auf Grund der notwendigen Einbindung eines menschlichen Benutzers auch fehleranfällig.

Einen automatisierten - und deswegen schnelleren - Adressiervorgang schlägt die DE 103 36 301 A1 vor. Der Adressiervorgang ist für ein Master-Slave-Bussystem mit einer Busleitung geeignet, deren Anfang und Ende mit der Master-Einheit verbunden ist. Des Weiteren ist die Busleitung durch die Slave-Einheiten fortlaufend durchgeschleift. Jede Slave-Einheit weist einen Schalter zum Unterbrechen der Busleitung auf. Um den Adressiervorgang zu initialisieren, wird auf einem Takteingang ein Adressenvergabesignal bereitgestellt, welches alle Slave-Einheiten dazu veranlasst, die Busleitung zu unterbrechen und einen Schieberegisterzustand einzunehmen. Dann überträgt die Master-Einheit an die erste Slave-Einheit sequentiell die zu vergebenden Adressen; die erste Slave-Einheit schiebt die Adressen wiederum nacheinander an die nachfolgende Slave-Einheit durch usw.. Wenn die erste Adresse auf diese Weise wieder bei der Master-Einheit ankommt, legt die Master-Einheit ein Adressenübernahmesignal am Takteingang an, woraufhin alle Slave-Einheiten ihre jeweils aktuelle Adresse übernehmen und ihren Schalter schließen.

Bei diesem Verfahren ist im Laufe eines Adressvergabevorgangs die Busleitung des Systems unterbrochen, so dass die Master-Einheit die Slave-Einheiten über einen Takteingang ansprechen muss. Des Weiteren ist das Verfahren nur für solche Systeme anwendbar, die eine ringförmige Busleitung aufweisen sowie eine Kommunikation von Slave zu Slave ermöglichen.

Ein anderes automatisches Adressierverfahren zeigt die DE 199 35 192 A1. Speziell eignet sich das Verfahren für ein Master-Slave-Bussystem, bei dem die Slave-Einheiten eine werkseitig vorgegebene, eindeutige Gerätekennung aufweisen. Bei der Initialisierung des Bussystems wird ein statisches Aktivierungssignal von einer Master-Einheit auf einer durch die Slave-Einheiten durchgeschleiften Adressleitung bereitgestellt. Zunächst erreicht das Signal nur die erste Slave-Einheit, die daraufhin in einen "aktivierten" Zustand überführt wird, in dem eine Adressierung möglich ist. Danach sendet der Master eine Teilnehmeradresse für die aktivierte Slave-Einheit. In Reaktion darauf sendet die Slave-Einheit ihre Gerätekennung an den Master. Stimmt die Kennung mit einer erwarteten Kennung überein, übernimmt die Slave-Einheit die Adresse. Dann schaltet eine Slave-interne Logikeinheit das Aktivierungssignal an den Adressleitungsausgang der Slave-Einheit durch, so dass das Aktivierungssignal den nächsten Slave erreicht. Ein adressierter Slave ist nicht mehr für Adressdaten zugänglich.

Diese Lösung ist für ein Bussystem mit unidirektionalen Leitungen und Slave-Einheiten mit werkseitig vorgegebener ID bzw. Gerätekennung geeignet. Nach der Initialisierung des Systems ist keine Adressierung mehr möglich.

EP 1 320 222 A1 betrifft ein Bussystem mit mehreren Master- und Slavemodulen, durch die eine Busleitung hindurchgeschleift ist. Ein Schalter in den Modulen kann die Busleitung unterbrechen. Vor dem Start des normalen Betriebs kann ein Adressierungsvorgang durchgeführt werden, indem die Schalter nacheinander geschlossen werden und Adressen an die dazugehörigen Slaves vergeben werden.

Ähnliche Verfahren sind in DE 44 28 502 A1, DE 102 33 978 A1, DE 44 04 962 C2, DE 10 2005 014 124 A1 und DE 10 2006 029 997 A1 beschrieben.

### Zusammenfassung der Erfindung

Vor diesem Hintergrund stellt sich die Erfindung die Aufgabe, eine flexibel, einfach und schnell adressierbare Slave-Einheit bereitzustellen, sowie Master-Einheiten zur Verwendung mit einer oder mehreren erfindungsgemäßen Slave-Einheiten. Des Weiteren stellt sich die Erfindung die Aufgabe, ein flexibles, einfaches und schnelles Verfahren zur Adressierung von erfindungsgemäßen Slave-Einheiten bereitzustellen, welches für eine Vielzahl von Bussystemen anwendbar ist.

Die Erfindung löst diese Aufgabe mit einer Slave-Einheit nach Anspruch 1, einer Master-Einheit nach Anspruch 9 und einem Verfahren nach Anspruch 13. Die abhängigen Ansprüche und die folgende Beschreibung stellen vorteilhafte Ausführungsformen der Erfindung bereit.

Im Wesentlichen basiert eine erfindungsgemäße Slave-Einheit auf einer konventionellen Slave-Einheit und eine erfindungsgemäße Master-Einheit auf einer konventionellen Master-Einheit, die jeweils zusätzlich mit im Folgenden beschriebenen Merkmalen ausgestattet sind, welche das erfindungsgemäße dynamische Adressierverfahren ermöglichen.

Eine Slave-Einheit umfasst erfindungsgemäß eine oder mehrere - ggf. an das verwendete Bussystem angepasste - Busschnittstellen, über welche sie mit einer oder mehreren Busleitungen eines Master-Slave-Bussystems verbunden werden kann. Dabei macht es grundsätzlich weder für das erfindungsgemäße Adressierverfahren noch für die erfindungsgemäße Ausgestaltung einer Slave- bzw. Master-Einheit einen Unterschied, in welcher Art von Master-Slave-Bussystem diese eingesetzt werden. Beispielsweise ist die Erfindung gleichermaßen für Bussysteme mit uni- oder bidirektionalen, ringförmigen und nicht ringförmigen Busleitungen und mit beliebigen Kommunikationsprotokollen geeignet.

Zusätzlich zu der oder den Busschnittstellen verfügt die erfindungsgemäße Slave-Einheit über zwei Steueranschlüsse, die innerhalb der Slave-Einheit über eine Freigabeschaltung unterbrechbar miteinander verbunden sind. Beispielsweise kann eine Steuerleitung über die Steueranschlüsse durch die Slave-Einheit durchgeschleift werden. In einigen Ausführungsformen ist die Steuerleitung als zusätzliche Ader einer an die - in diesem Fall mindestens zwei - Busschnittstellen angeschlossenen Busleitung ausgebildet, so dass die Steueranschlüsse einen Teil der Busschnittstellen bilden.

Zur selektiven Unterbrechung der Steuerleitung weist die Freigabeschaltung einen (oder auch mehrere) Schalter auf, beispielsweise ein Relais, welcher in Abhängigkeit von einem an der Busschnittstelle bereitgestellten Signal öffnet oder schließt. Um an der Busschnittstelle bereitgestellte Signale empfangen und interpretieren zu können, umfasst die Slave-Einheit beispielsweise eine entsprechend angepasste Steuerung, etwa einen Mikrocontroller. Die Steuerung bearbeitet üblicherweise nur solche an der Busschnittstelle anliegenden Signale, die entweder direkt an die Slave-Einheit (wozu die Slave-Einheit jedoch bereits eine individuelle Adresse aufweisen muss) oder alternativ an alle Slave-Einheiten des Bussystems bzw. an eine Gruppe von Slave-Einheiten, zu der die Slave-Einheit gehört, gerichtet sind. Auf ein entsprechendes, an der Busschnittstelle anliegendes Schaltsignal hin veranlasst die Steuerung in entsprechenden Ausführungsformen das Öffnen oder Schließen des Schalters.

Die Freigabeschaltung mit der beschriebenen Schalteranordnung erfüllt den Zweck, die Slave-Einheit unter bestimmten Bedingungen zur Adressierung freizugeben und andernfalls zu sperren. Ist die Slave-Einheit zur Adressierung freigegeben, so kann sie ggf. eine durch ein an der Busschnittstelle anliegendes Adressierungssignal zugewiesene Adresse als ihre eigene Adresse übernehmen. Befindet sich die Slave-Einheit hingegen im gesperrten Zustand, so übernimmt sie in keinem Fall eine Adresse - das Übernehmen einer Adresse ist auch bei Anliegen eines entsprechenden Adressierungssignals an der Busschnittstelle nicht möglich. Konkret gibt die Freigabeschaltung die Slave-Einheit nur dann zur Adressierung frei, wenn der die Steuerleitung unterbrechende Schalter geöffnet ist und gleichzeitig an einem der Steueranschlüsse ein Steuersignal anliegt.

Diese Funktionalität der Freigabeschaltung erlaubt das dynamische Adressieren mehrerer an einem Bussystem angeschlossener, erfindungsgemäßer Slave-Einheiten, indem sie ein "Weitergeben" der Freigabebedingungen von Slave-Einheit zu Slave-Einheit ermöglicht, so dass immer nur eine Slave-Einheit auf einmal zur Adressierung freigegeben ist. Hierzu wird beispielsweise von einer Master-Einheit ein statisches Steuersignal, etwa eine Gleichspannung von 5 Volt, auf eine Steuerleitung gelegt, die von Slave-Einheit zu Slave-Einheit geführt und über die Steueranschlüsse durch die Slave-Einheiten durchgeschleift ist. Vor Anlegen des Signals veranlasst die Master-Einheit vorzugsweise alle zu adressierenden Slave-Einheiten zu einem Öffnen ihrer Schalter, zum Beispiel durch ein entsprechendes Broadcast-Signal. Alternativ - zum Beispiel bei einem Vorgang zur Umadressierung bestimmter Slave-Einheiten - stellt die Master-Einheit ein entsprechendes, an diese Slave-Einheiten gerichtetes Schaltsignal an der Busschnittstelle bereit, so dass die Steuerleitung nur in jeder zu adressierenden Slave-Einheit unterbrochen ist.

Entsprechend gelangt das angelegte Steuersignal nur bis zur ersten Slave-Einheit mit geöffnetem Schalter. Weil deren Freigabeschaltung das Anliegen des Steuersignals an einem ihrer Steueranschlüsse bei geöffnetem Schalter feststellt, gibt sie die Slave-Einheit zur Adressierung frei.

Da die Steuerleitung in dieser ersten Slave-Einheit durch den geöffneten Schalter unterbrochen ist, erreicht das Steuersignal zu diesem Zeitpunkt nicht die auf die erste Slave-Einheit folgenden Slave-Einheiten. Nur die erste Slave-Einheit befindet sich im freigegebenen Zustand. Daher kann zum Beispiel eine Master-Einheit nunmehr eine eindeutige Adressierung der ersten Slave-Einheit vornehmen, indem sie eine Broadcast-Nachricht zur Zuweisung einer bestimmten Adresse auf den Bus legt: Da nur die erste Slave-Einheit zur Adressierung freigegeben ist, übernimmt nur die erste Slave-Einheit die Adresse, obwohl die Zuweisung eigentlich an alle Slave-Einheiten gerichtet ist. Ob die Adresse korrekt übernommen wurde, kann die Master-Einheit bei Bedarf gleich darauf überprüfen, indem sie eine Abfragenachricht an die Slave-Einheit mit der eben vergebenen Adresse sendet und auf eine Antwort wartet. Dann legt die Master-Einheit die Anweisung an die Slave-Einheit mit der eben vergebenen Adresse auf den Bus, ihren Schalter zu schließen, so dass das Steuersignal an die folgende Slave-Einheit durchgeschaltet wird. Für die erste Slave-Einheit sind die Freigabe-Bedingungen daher nicht mehr erfüllt; sie befindet sich wieder im Sperrzustand. Nun kann die Master-Einheit den Adressiervorgang für die folgenden Slave-Einheiten wiederholen usf.. Beendet wird der Adressiervorgang durch Wegnahme des auf der Steuerleitung anliegenden Steuersignals. Dies wird etwa dann veranlasst, wenn alle Slave-Einheiten adressiert wurden, oder wenn - zum Beispiel bei einem Umadressierungsvorgang - alle umzuadressierenden Slave-Einheiten umadressiert wurden.

Während eines solchen Adressiervorgangs speichert die Master-Einheit beispielsweise in einer geeigneten Speichereinheit ab, welche Slave-Einheiten mit welcher Adresse in welcher Reihenfolge an das Bussystem angeschlossen sind.

Der oben beschriebene Adressiervorgang ist einfach und zeitsparend, da keine manuellen Tätigkeiten vorzunehmen sind. Des Weiteren erlaubt er eine Anwendung für viele verschiedene Bussysteme, beispielsweise für Bussysteme mit oder ohne Ringleitung, mit oder ohne durch die Slave-Einheiten durchgeschleifter Busleitung, und für uni- und bidirektionale Bussysteme. Ein weiterer Vorteil besteht darin, dass die Slave-Einheiten jederzeit und in beliebiger Reihenfolge adressiert werden können, da ihre Schalter über die Busschnittstelle ansprechbar sind. Auf Grund der Sperrung der Slave-Einheiten bei Nicht-Vorliegen der Freigabebedingungen ist eine versehentliche Adressierung normalerweise ausgeschlossen.

### Kurze Beschreibung der Zeichnungen

Die folgenden Figuren erläutern die Erfindung an Hand von beispielhaften Ausführungsformen, wobei:
- Figur 1: schematisch den Aufbau eines beispielhaften Bussystems zeigt, in dem erfindungsgemäße Slave-Einheiten eingesetzt werden können;
- Figur 2: eine Ausführungsform einer Freigabeschaltung einer erfindungsgemäßen Slave-Einheit zeigt;
- Figur 3: eine weitere Ausführungsform einer Freigabeschaltung einer erfindungsgemäßen Slave-Einheit zeigt;
- Figur 4: ein Flussdiagramm zeigt, das den Ablauf einer Ausführungsform des erfindungsgemäßen Verfahrens aus Sicht einer Master-Einheit darstellt; und
- Figur 5: ein Flussdiagramm zeigt, das den Ablauf der in Figur 4 gezeigten Ausführungsform des erfindungsgemäßen Verfahrens aus Sicht einer Slave-Einheit darstellt.

### Detaillierte Beschreibung der Figuren

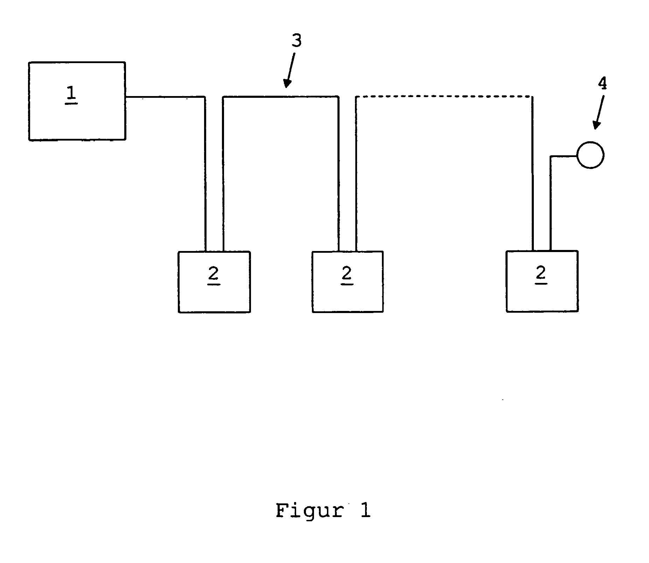

Figur 1 zeigt ein beispielhaftes Master-Slave-Bussystem, in dem erfindungsgemäße Slave-Einheiten zum Einsatz kommen. Das Bussystem umfasst eine Master-Einheit 1, die mit dem Anfang einer Busleitung 3 verbunden ist. Im gezeigten Ausführungsbeispiel ist in die Busleitung 3 auch eine Steuerleitung integriert. Wie gezeigt, ist die Busleitung zu einem ersten Slave 2 geführt und durch diesen hindurchgeschleift. Hierzu verfügt die Slave-Einheit 2 über zwei Busschnittstellen. Danach ist die Busleitung 3 zu einem zweiten Slave 2 geführt, durch diesen hindurchgeschleift usw., bis zu einem letzten Slave 2, nach dem die Busleitung zu einem Abschlusswiderstand 4 geführt ist. Bei dem gezeigten System handelt es sich beispielsweise um ein Feldbussystem, das zum Beispiel nach dem Modbus-Kommunikationsprotokoll funktioniert. Die Kommunikation erfolgt bidirektional über einen 2-Draht-Feldbus mit GND_COM-Anschluss. Als Busschnittstellen der Slave-Einheiten kommen beispielsweise RS485-Schnittstellen zum Einsatz. Modbus-Systeme finden beispielsweise in intelligenten Häusern etc. Verwendung.

Die Erfindung kann keineswegs nur in dem gezeigten Bussystem eingesetzt werden, sondern ist für eine Vielzahl anderer Systeme anwendbar. So ist die Busleitung 3 in manchen Ausführungsformen nicht durch die Slave-Einheiten 2 durchgeschleift, sondern die Slave-Einheiten 2 sind jeweils über eine einzelnen Busschnittstelle an die Busleitung angeschlossen. Die verwendeten Busleitungen können sowohl uni- als auch bidirektional sein. Auch ist die Erfindung vorzugsweise für Bussysteme anwendbar, die mehrere Master haben, und für nach einem beliebigen Busprotokoll arbeitende Bussysteme. Die erfindungsgemäße Adressierungsfunktionalität und die hierfür notwendigen Einheiten werden hierdurch normalerweise nicht beeinflusst.

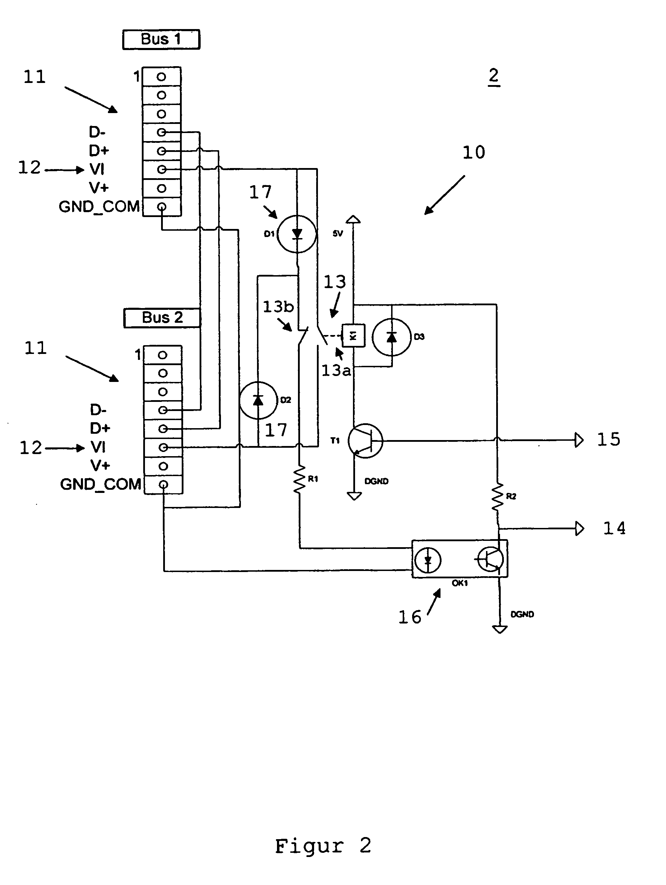

Figur 2 stellt im Detail eine Ausführungsform einer Freigabeschaltung 10 dar, die im Inneren eines Ausführungsbeispiels einer erfindungsgemäßen Slave-Einheit 2 angeordnet ist. Des Weiteren zeigt Figur 2 zwei Busschnittstellen 11 der Slave-Einheit 2. In anderen Ausführungsformen weist die Slave-Einheit 2 nur eine oder mehr als zwei Busschnittstellen 11 auf. Zum Beispiel kann im letzteren Fall eine der Busschnittstellen für Servicefunktionen genutzt werden.

Die Busschnittstellen 11 umfassen in der gezeigten Ausführungsform unter Anderem Adressleitungen D- und D+, auf denen ein Adressierungssignal bereitgestellt werden kann. Zudem führt eine Leitung GND_COM ein Bezugspotential der Busschnittstelle. Wie für die Adressleitungen beispielhaft angedeutet, ist die Busleitung in der gezeigten Ausführungsform durch die Slave-Einheit 2 durchgeschleift, wobei ein (nicht gezeigter) Mikrocontroller der dargestellten Slave-Einheit 2 Signale von der Busschnittstelle 11 abfassen kann.

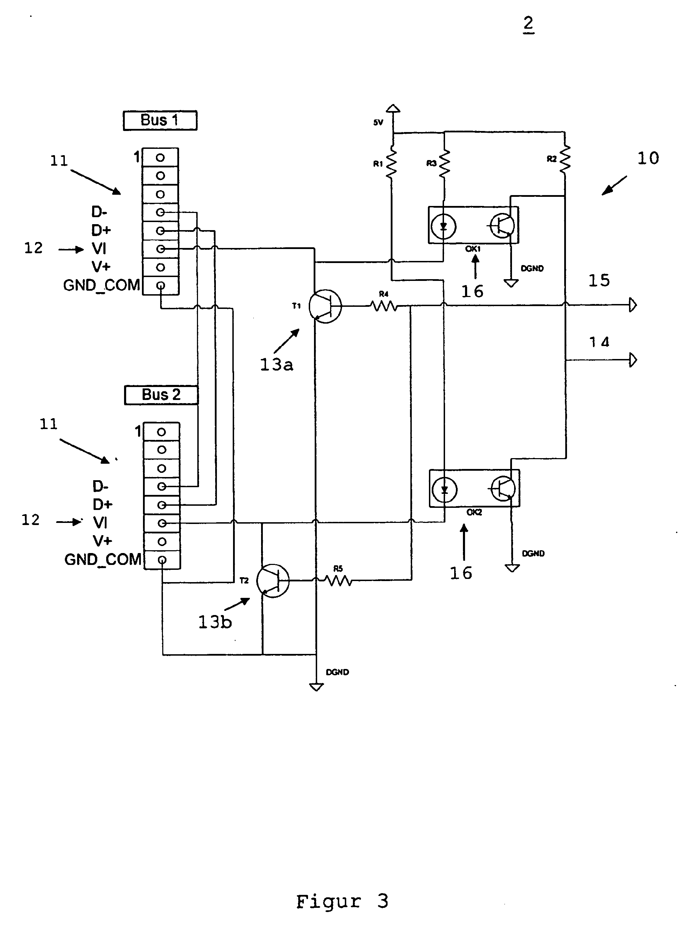

In der dargestellten Ausführungsform sind die Steueranschlüsse 12 als zusätzlicher Pin in den Busschnittstellen 11 ausgeführt. Eine nicht gezeigte, mit den Steueranschlüssen 12 verbundene Steuerleitung ist zusammen mit bzw. integriert in einer mit der Busschnittstelle 11 verbundenen, ebenfalls nicht gezeigten Busleitung geführt. In anderen Ausführungsformen sind die Steueranschlüsse 12 getrennt von der bzw. den Busschnittstellen der Slave-Einheit 2 ausgebildet. In der dargestellten Ausführungsform weist die Steuerleitung ein eigenes Bezugspotential auf; die Steuerleitung ist daher zweiadrig ausgeführt. Diese Ausgestaltung vermeidet Ausgleichsströme in der GND_COM-Leitung des Busanschlusses D- D+ durch die Steuerleitung. Andere Ausführungsformen verwenden das Bezugspotential der Busleitung (vgl. auch Figur 3).

Die Freigabeschaltung 10 umfasst in der gezeigten Ausführungsform ein Relais 13, über dessen Schalter 13a die Steueranschlüsse 12 miteinander verbunden sind. Bei entsprechender Ausgestaltung des verwendeten Relais 13 liegt in der dargestellten Ausführungsform eine galvanische Trennung der Steueranschlüsse vor, was aus Sicherheitsgründen vorteilhaft ist. Eine gegenseitige Beeinflussung der Busleitung D- D+ und der Steuerleitung durch Störströme wird verhindert.

Befindet sich der Schalter 13a - wie in der Figur dargestellt - in der Offen-Stellung, ist die Verbindung zwischen den Steueranschlüssen 12 unterbrochen. Die Stellung von Schalter 13b von Relais 13 hängt von der Stellung von Schalter 13a ab: Befindet sich Schalter 13a in der Geschlossen-Stellung, so befindet sich Schalter 13b in der Offen-Stellung und umgekehrt.

Wenn die Steuerleitung - wie gezeigt - durch Schalter 13a unterbrochen ist, so wird in der gezeigten Ausführungsform demnach ein an einem der Steueranschlüsse 12 anliegendes Signal über den geschlossenen Schalter 13b und einen Strombegrenzungswiderstand R1 zum Eingang eines Optokopplers 16 und weiter zum Bezugspotential GND_COM geführt. Hierbei spielt es keine Rolle, an welchem der beiden Steueranschlüsse 12 das Steuersignal anliegt, da die beiden Dioden 17 nur einen Stromfluss in einer gewünschten Richtung zulassen, so dass ein Signal von jedem der beiden Steueranschlüsse 12 an den Optokoppler 16 weitergegeben wird. Als Steuersignal dient beispielsweise eine am Anschluss VI gegenüber dem Bezugspotential GND angelegte Gleichspannung von 5 Volt.

Über den Ausgang des Optokopplers 16 wird das Steuersignal bei geöffnetem Schalter 13a an einen Freigabeeingang 14 des nicht gezeigten Mikrocontrollers angelegt. Des Weiteren ist der Ausgang des Optokopplers 16 in der gezeigten Ausführungsform mit einem Pull-Up-Widerstand R2 beschaltet. Der Optokoppler 16 sorgt für eine galvanische Trennung zwischen den Steueranschlüssen und einem hier vom Mikrocontroller gebildeten Auswerteteil der Freigabeschaltung. Im gezeigten Beispiel ist die galvanische Trennung aus Sicherheitsgründen oder bei zu großen Potentialunterschieden vorteilhaft. Statt des Optokopplers 16 können an dieser Stelle selbstverständlich auch andere Elemente verwendet werden, die eine galvanische Entkopplung bewirken; oder es kann völlig auf eine galvanische Entkopplung verzichtet werden. Auch der Einsatz eines Strombegrenzungswiderstands oder eines Pull-Up-Widerstands ist für die erfindungsgemäße Slave-Einheit nicht wesentlich. Entsprechend können hier auch andere Bauelemente verwendet werden. Des Weiteren ist ein Mikrocontroller nur ein Beispiel für eine Steuerung, die in Slave-Einheiten verwendet wird, und soll nicht als einschränkend betrachtet werden.

Entsprechend den obigen Ausführungen liegt das Steuersignal in der gezeigten Ausführungsform dann am Freigabeeingang 14 an, wenn die Freigabebedingungen "Steuerleitung durch offenen Schalter 13a unterbrochen" und "Steuersignal liegt an einem der Steueranschlüsse an" vorliegen. Das Anliegen des Steuersignals bewirkt einen Freigabezustand des Freigabeeingangs bzw. des Mikrocontrollers. In Folge dessen lässt der Mikrocontroller eine Zuweisung einer Adresse an die Slave-Einheit 2 zu, falls ein entsprechendes Signal auf der Adressleitung der Busschnittstelle bereitgestellt wird. Liegt kein Steuersignal am Freigabeeingang 14 an, weil entweder kein Steuersignal an einem der Steueranschlüsse 12 anliegt, oder weil der Schalter 13a geschlossen und der Schalter 13b geöffnet ist, so sind die Freigabebedingungen nicht erfüllt, und der Freigabeeingang bzw. der Mikrocontroller befindet sich im Sperrzustand.

Der Mikrocontroller verfügt in der gezeigten Ausführungsform des Weiteren über einen Ausgang 15 zur Ansteuerung des Relais 13, den er in Abhängigkeit von an der Busschnittstelle anliegenden Signalen setzt. So gibt in der gezeigten Ausführungsform der Ausgang 15 die Stellung der Schalter 13a und 13b vor.

Figur 3 stellt eine andere Ausführungsform einer Freigabeschaltung 10 dar, die im Inneren eines Ausführungsbeispiels einer erfindungsgemäßen Slave-Einheit 2 angeordnet sein kann. Für Elemente der in Figur 3 gezeigten Freigabeschaltung 10, die den in Bezug auf Figur 2 beschriebenen Elementen entsprechen, gelten die oben stehenden Erläuterungen.

Von der Ausführungsform gemäß Figur 2 unterscheidet sich die Freigabeschaltung nach Figur 3 hauptsächlich dadurch, dass für das Steuersignal das Bezugspotential der Busleitung genutzt wird. Eine zweiadrige Ausführung der Steuerleitung ist daher nicht notwendig. Außerdem kommen hier statt des gemäß Figur 2 verwendeten Relais zur Unterbrechung der Steuerleitung zwei Transistoren zum Einsatz, was die Schaltung verbilligt und verkleinert. Eine galvanische Trennung der Steueranschlüsse ist bei dieser Ausführungsform nicht gegeben.

Die Transistoren 13a und 13b verbinden die Steueranschlüsse 12 als Schalter mit dem Bezugspotential DGND, das dem Bezugspotential der Busschnittstelle GND_COM entspricht. Sie werden über den Ausgang 15 des (nicht gezeigten) Mikrocontrollers in Abhängigkeit von einem an der Busschnittstelle anliegenden, an die Slave-Einheit gerichteten Schaltsignal so angesteuert, dass sich jeweils beide Schalter 13a und 13b in einer Geschlossen-Stellung oder in einer Offen-Stellung befinden. Sind beide Schalter 13a und 13b geöffnet, ist die Verbindung zwischen den Steueranschlüssen 12 und DGND unterbrochen.

Wenn die Steuerleitung durch die Schalter 13a und 13b unterbrochen ist, so wird in der gezeigten Ausführungsform demnach ein an einem der Steueranschlüsse 12 anliegendes Signal zum Eingang eines Optokopplers 16, über einen Strombegrenzungswiderstand R1 bzw.R3 und weiter zum (z.B.) 5Volt-Anschluß geführt. Hierbei spielt es keine Rolle, an welchem der beiden Steueranschlüsse 12 das Steuersignal anliegt, da die beiden Steuereingänge 12 identisch aufgebaut sind, so dass ein Signal von jedem der beiden Steueranschlüsse 12 an einen der beiden Optokoppler 16 weitergegeben wird. Als Steuersignal dient beispielsweise eine am Anschluss VI gegenüber dem Bezugspotential GND angelegte Gleichspannung von 0 Volt, die beispielsweise durch eine einfache Brücke vom Anschluss VI zum Bezugspotential GND_COM realisiert werden kann.

Über den Ausgang des jeweiligen Optokopplers 16 wird das Steuersignal bei geöffneten Schaltern 13a und 13b an einen Freigabeeingang 14 des nicht gezeigten Mikrocontrollers angelegt. Des Weiteren ist der Ausgang des der Optokopplers 16 in der gezeigten Ausführungsform mit einem Pull-Up-Widerstand R2 beschaltet. Die Optokoppler 16 sorgen genau wie beim Ausführungsbeispiel nach Figur 2 für eine galvanische Trennung zwischen den Steueranschlüssen 12 und einem hier vom Mikrocontroller gebildeten Auswerteteil der Freigabeschaltung. Im gezeigten Beispiel ist die galvanische Trennung aus Sicherheitsgründen oder bei zu großen Potenzialunterschieden vorteilhaft. Statt der Optokoppler 16 können an dieser Stelle selbstverständlich auch hier andere Elemente verwendet werden, die eine galvanische Entkopplung bewirken; oder es kann völlig auf eine galvanische Entkopplung verzichtet werden. Auch der Einsatz von Strombegrenzungswiderständen und/oder Pull-Up-Widerständen ist für die erfindungsgemäße Slave-Einheit nicht wesentlich. Entsprechend können hier auch andere Bauelemente verwendet werden. Des Weiteren ist ein Mikrocontroller nur ein Beispiel für eine Steuerung, die in Slave-Einheiten verwendet wird, und soll nicht als einschränkend betrachtet werden. Auch die Transistoren 13a und 13b können durch Bauteile entsprechender Funktion ersetzt werden.

Entsprechend den obigen Ausführungen liegt das Steuersignal in der gezeigten Ausführungsform dann am Freigabeeingang 14 an, wenn die Freigabebedingungen "Steuerleitung durch geöffneten Schalter unterbrochen" und "Steuersignal liegt an einem der Steueranschlüsse an" vorliegen. Das Anliegen des Steuersignals bewirkt einen Freigabezustand des Freigabeeingangs bzw. des Mikrocontrollers. In Folge dessen lässt der Mikrocontroller eine Zuweisung einer Adresse an die Slave-Einheit 2 zu, falls ein entsprechendes Signal auf der Adressleitung der Busschnittstelle bereitgestellt wird. Liegt kein Steuersignal am Freigabeeingang 14 an, weil entweder kein Steuersignal an einem der Steueranschlüsse 12 anliegt, oder weil die Schalter 13a und 13b geschlossen sind, so sind die Freigabebedingungen nicht erfüllt, und der Freigabeeingang bzw. der Mikrocontroller befindet sich im Sperrzustand.

Weisen die Slave-Einheiten 2 eines Bussystems eine der in Figuren 2 und 3 gezeigten oder eine andere entsprechende Freigabeschaltung 10 auf, so sind sie auf die oben beschriebene Weise einfach und schnell dynamisch adressierbar. Des Weiteren ist ersichtlich, dass die Adressierfunktion der Slave-Einheit 2 keine spezielle Struktur der Busschnittstelle(n) 11 erfordert und auch bidirektionale Bussysteme unterstützt. Es ist lediglich notwendig, gegenüber konventionellen Einheiten zwei Steueranschlüsse und eine Freigabeschaltung vorzusehen, ggf. in entsprechenden Ausführungsformen zusätzlich noch einen Freigabeeingang und einen Ausgang zur Ansteuerung des Schalters einer Steuerung. Daher kann die Erfindung mit relativ geringem Aufwand implementiert werden.

Da die Stellung des die Steuerleitung unterbrechenden Schalters über die Busschnittstelle steuerbar ist, kann eine Master-Einheit außerdem jederzeit eine Adressierung bzw. Umadressierung eines Slaves vornehmen.

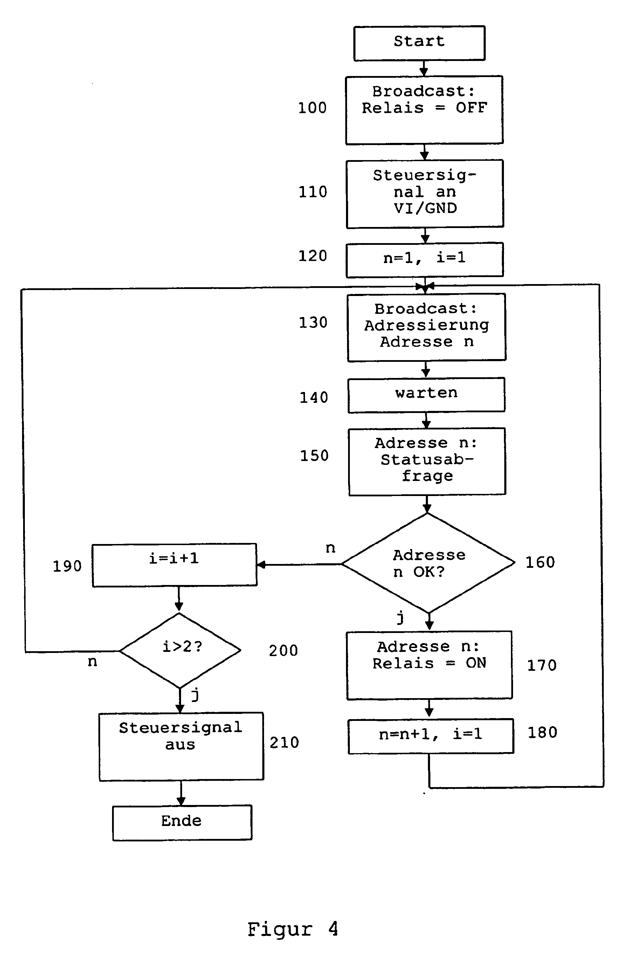

Figur 4 stellt beispielhaft einen Adressiervorgang gemäß einer Ausführungsform der Erfindung aus der Sicht einer Master-Einheit dar, die über eine Busleitung mit einer Anzahl m erfindungsgemäßer Slave-Einheiten verbunden ist, welche eine Freigabeschaltung 10 entsprechend Figur 2 aufweisen. Für erfindungsgemäße Slave-Einheiten mit abweichenden Freigabeschaltungen (zum Beispiel einer Freigabeschaltung 10 nach Figur 3) gelten die folgenden Ausführungen entsprechend.

Des Weiteren ist die Master-Einheit an eine Steuerleitung angeschlossen, die nacheinander über deren Steueranschlüsse durch die Slave-Einheiten durchgeschleift ist. Der beschriebene Adressiervorgang wird beispielsweise bei der Initialisierung des Systems ausgeführt und spricht alle Slave-Einheiten an. Alternative Adressiervorgänge betreffen nur einzelne Slave-Einheiten, oder Untergruppen von Slave-Einheiten; dann wird eine entsprechend abgewandelte Form des dargestellten Adressiervorgangs verwendet.

Zu Beginn eines Adressiervorgangs sendet die Master-Einheit in Schritt 100 eine Broadcastnachricht an alle an den Bus angeschlossenen Slave-Einheiten, welche die Slave-Einheiten dazu veranlasst, ihre Relais in den OFF-Zustand zu schalten. Dieser Zustand entspricht dem in Figur 2 gezeigten Zustand, in dem der Schalter 13a geöffnet ist. Zum Beispiel bei einer Umadressierung einzelner Slave-Einheiten kann die Master-Einheit auch alternativ nur einzelne Slave-Einheiten zu einem Umschalten ihrer Relais veranlassen. In einigen Ausführungsformen wird dieser Schritt ausgelassen, zum Beispiel wenn sich die Slave-Einheiten ohnehin - zum Beispiel nach einem Initialisierungsvorgang - in einem Relais-OFF-Zustand befinden.

Als nächsten Schritt 110 legt die Master-Einheit in dieser Ausführungsform als Steuersignal eine Gleichspannung zwischen der Steuerleitung VI und einem Bezugspotential GND an, das auf Grund der geöffneten Schalter der Slave-Einheiten nur bis zur ersten Slave-Einheit gelangt. Auf Grund ihrer Freigabeschaltung 10 wird diese erste Slave-Einheit durch das anliegende Steuersignal und die OFF-Stellung des Relais in einen zur Adressierung freigegebenen Zustand versetzt.

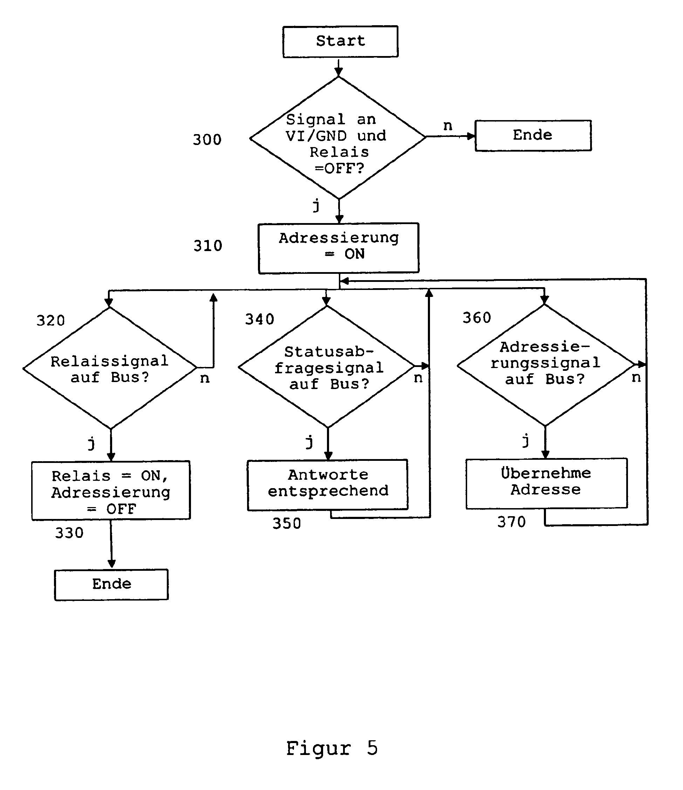

Nachdem sie das Steuersignal auf der Steuerleitung gesetzt hat, initialisiert die Master-Einheit in der gezeigten Ausführungsform den Adressiervorgang in Schritt 120, indem sie die Variable n, welche die aktuell zu adressierende Slave-Einheit bezeichnet, und die Variable i, welche in dieser Ausführungsform zur Feststellung dient, ob die letzte Slave-Einheit adressiert wurde, jeweils auf Eins setzt. Danach sendet die Master-Einheit in Schritt 130 ein Broadcastsignal über die Busleitung, welches die Adresse 1 unbestimmt an alle Slaves zuweist. Da jedoch nur die erste Slave-Einheit zur Adressierung freigegeben ist, übernimmt nur diese Slave-Einheit die Adresse 1, vgl. Figur 5.

Danach wartet die Master-Einheit in dieser Ausführungsform eine kurze Zeit ab (Schritt 140), um der Slave-Einheit genügend Zeit für die Übernahme der Adresse zu geben, bevor sie in Schritt 150 über die Busleitung eine Statusabfrage an die eben adressierte Slave-Einheit mit der Adresse 1 startet. Mittels dieser Statusabfrage stellt die Master-Einheit sicher, dass die Adressierung erfolgreich war; außerdem verwendet sie die Statusabfrage hier zu der Feststellung, ob noch weitere Slave-Einheiten zu adressieren sind (siehe unten). Jedoch kann dieser Schritt ausgelassen werden oder in anderer Form oder später, zum Beispiel nach Beendigung des Adressiervorgangs, ausgeführt werden. Es ist für die Master-Einheit ohne Weiteres möglich, die Anzahl der Slave-Einheiten auf andere Art und Weise festzustellen, zum Beispiel vor Beginn des Adressierungsvorgangs.

Erhält die Master-Einheit von der angesprochenen Slave-Einheit über die Busleitung die Rückmeldung (vgl. Schritt 160), dass die Adressierung erfolgreich war, sendet sie ebenfalls auf der Busleitung die Anweisung an die eben adressierte Slave-Einheit mit der Adresse 1, ihr Relais in den ON-Zustand zu versetzen, in dem der Schalter 13a geschlossen ist und das Steuersignal daher an die nächste Slave-Einheit weitergegeben wird. Die Slave-Einheit mit der Adresse 1 wird dadurch wieder in den Sperrzustand versetzt, während die erste darauf folgende Slave-Einheit mit geöffnetem Schalter (Relais-OFF-Zustand) in den Freigabezustand versetzt wird.

Danach wiederholt die Master-Einheit den Adressierungsvorgang so lange für die jeweils nächste Slave-Einheit (vgl. Schritt 180), bis nacheinander alle Slave-Einheiten adressiert wurden, die adressiert werden sollten. Sollen - zum Beispiel bei einem Umadressierungsvorgang - nicht nur aufeinander folgende Einheiten adressiert werden, ist Schritt 180 entsprechend anzupassen, so dass n nacheinander eine vorgegebene Zahlenfolge o.ä. einnimmt.

In der gezeigten Ausführungsform wird festgestellt, dass keine unadressierten Slave-Einheiten mehr vorhanden sind, wenn auf die Statusabfrage hin wiederholt (hier zweimal) keine Antwort eingeht (vgl. Schritt 200). Hierzu wird die Variable i verwendet, die bei jeder nicht erfolgreichen Statusabfrage in Schritt 190 hochgezählt wird. Erfolgt hingegen eine korrekte Rückmeldung auf die Statusabfrage, wird die Variable i wieder auf 1 gesetzt (Schritt 180). Alternativ stellt die Master-Einheit die Anzahl m der Slave-Einheiten vor Beginn der Adressierung fest und stoppt die Adressierung, wenn n = m. Statt dessen ist auch ein manueller Eingriff durch einen Benutzer möglich, mit dem der Benutzer den Adressiervorgang anstößt oder beendet.

Sind alle zu adressierenden Slave-Einheiten adressiert, nimmt die Master-Einheit das Steuersignal von der Steuerleitung (Schritt 210). Damit ist der Adressiervorgang beendet.

Figur 5 zeigt den in Bezug auf Figur 4 beschriebenen Adressiervorgang aus der Sicht einer erfindungsgemäßen Slave-Einheit.

In der gezeigten Ausführungsform überprüft die Slave-Einheit in Schritt 300 kontinuierlich, ob die Bedingungen für den freigegebenen Zustand vorliegen, also ob ein Signal an einem Steueranschluss anliegt und sich ihr die Steuerleitung unterbrechender Schalter in einem Offen-Zustand befindet. Dies kann beispielsweise durch eine geeignete Software beobachtet werden. Alternativ sorgt eine Hardwareschaltung, beispielsweise die in Figur 2 gezeigte Schaltung, dafür, dass bei Erfüllung der Bedingungen zum Beispiel eine Spannung an einem Freigabeeingang einer Auswerteschaltung anliegt. So kann die Auswerteschaltung das Vorliegen der Bedingungen einfach am Zustand ihres Freigabeeingangs ablesen. In einer alternativen Ausführungsform überprüft eine Slave-Einheit ihren Zustand erst dann, wenn an der Busschnittstelle ein Adressierungssignal vorliegt.

Wird die Erfüllung der Bedingungen festgestellt, befindet sich die Slave-Einheit im freigegebenen oder adressierbaren Zustand, der in Figur 5 mit Adressierung = ON bezeichnet ist (vgl. Schritt 310). Wenn ein Adressierungssignal auf den Bus gelegt wird, solange sich die Slave-Einheit in diesem Zustand befindet, so übernimmt die Slave-Einheit bzw. eine Steuerung der Slave-Einheit die entsprechende Adresse und hinterlegt sie zum Beispiel in einem Speicher (Schritte 360 und 370). In Zukunft reagiert die Slave-Einheit nicht nur auf Broadcast-Nachrichten, sondern auch auf an diese Adresse gerichtete Nachrichten, bis die Adresse überschrieben wird. In einigen Ausführungsformen wird die Adresse bei jeder Deaktivierung der Slave-Einheit gelöscht und muss neu zugewiesen werden. Andere Ausführungsformen umfassen beispielsweise einen spannungsgepufferten Speicher, in dem eine Adresse auch nach einem Spannungsausfall oder einer Spannungsabschaltung gespeichert wird, so dass eine Adresse in diesem Fall nicht neu zugewiesen werden muss. Entsprechendes gilt für die Master-Einheit.

Des Weiteren fasst die Slave-Einheit- unabhängig vom freigegebenen Zustand - Nachrichten auf dem Bus ab und handelt entsprechend der empfangenen Nachricht. Erfolgt beispielsweise eine an sie gerichtete Statusabfrage, ob die Adressierung erfolgreich war, antwortet sie entsprechend (Schritte 340 und 350).

Bei Empfang eines entsprechenden, an die Slave-Einheit gerichteten Signals an der Busschnittstelle schaltet die Slave-Einheit den Schalter um, was zu einem Verlassen des freigegebenen Zustands und zu einem Übergang in den Sperrzustand führt, der in Figur 5 mit Adressierung OFF bezeichnet ist (Schritte 320 und 330). In diesem Zustand ist die Slave-Einheit nicht adressierbar. Jedoch ist die Slave-Einheit zu jedem Zeitpunkt wieder in den freigegebenen Zustand versetzbar, indem die beiden notwendigen Freigabebedingungen wieder erfüllt werden.

Erfindungsgemäße Slave-Einheiten, Bussysteme mit erfindungsgemäßen Slave-Einheiten sowie das erfindungsgemäße Adressierverfahren kommen zum Beispiel bei Klimasteuerungen, für Reinraumanwendungen und für Lüftungssteuerungen zum Einsatz. Besonders vorteilhaft erweist sich die Erfindung für als Slave-Einheiten des Bussystems definierte Lüfter und Ventilatoren, die unabhängig voneinander ansteuerbare Steuerelektroniken umfassen. Jedoch kommt die Erfindung auch für beliebige andere Anwendungen zum Einsatz.

## Patentansprüche

1. Dynamisch adressierbare Slave-Einheit (2), umfassend:
eine Busschnittstelle (11);
eine Freigabeschaltung (10) mit einem Schalter (13a);
zwei Steueranschlüsse (12), die über den Schalter (13a) der Freigabeschaltung (10) verbunden sind;
wobei die Freigabeschaltung (10) dazu ausgelegt ist, die Slave-Einheit (2) nur dann für die Zuweisung einer Adresse durch ein an der Busschnittstelle (11) bereitgestelltes Adressierungssignal freizugeben, wenn an einem der Steueranschlüsse (12) ein Steuersignal bereitgestellt ist und wenn der Schalter (13a) der Freigabeschaltung (10) offen ist; und
wobei die Freigabeschaltung (10) dazu ausgelegt ist, die Slave-Einheit (2) ansonsten für die Zuweisung einer Adresse zu sperren;
**dadurch gekennzeichnet, dass** die Slave-Einheit (2) dazu ausgelegt ist, den Schalter (13a) in Abhängigkeit von einem an der Busschnittstelle (11) bereitgestellten, an die der Slave-Einheit (2) zugewiesene Adresse gerichteten Schaltsignal zu schließen;
wobei die Freigabeschaltung (10) eine Auswerteschaltung mit einem Freigabeeingang (14) umfasst, wobei der Zustand des Freigabeeingangs (14) davon abhängt, ob an einem der Steueranschlüsse (12) ein Steuersignal bereitgestellt ist und ob der Schalter (13a) der Freigabeschaltung (10) offen oder geschlossen ist, und wobei die Auswerteschaltung in Abhängigkeit vom Zustand des Freigabeeingangs (14) festlegt, ob die Slave-Einheit (2) für eine Adressierung freigegeben oder gesperrt ist.

2. Dynamisch adressierbar Slave-Einheit (2) nach Anspruch 1, bei der die Freigabeschaltung (10) eine Schaltanordnung umfasst, welche ermöglicht, dass eine Freigabe der Slave-Einheit (2) für die Zuweisung einer Adresse durch die Freigabeschaltung (10) unabhängig davon erfolgt, an welchem der beiden Steueranschlüsse (12) das Steuersignal bereitgestellt ist.

3. Dynamisch adressierbare Slave-Einheit (2) nach einem der Ansprüche 1 oder 2, bei der der Freigabeeingang (14) galvanisch von den Steueranschlüssen (12) getrennt ist.

4. Dynamisch adressierbare Slave-Einheit (2) nach einem der vorangehenden Ansprüche, wobei die Auswerteschaltung ein Mikrocontroller ist.

5. Dynamisch adressierbare Slave-Einheit (2) nach einem der vorangehenden Ansprüche, bei der die Freigabeschaltung (10) so ausgelegt ist, dass ein an einem der Steueranschlüsse (12) anliegendes Steuersignal bei geöffnetem Schalter (13a) auch am Freigabeeingang (14) der Auswerteschaltung anliegt, bei geschlossenem Schalter (13a) nicht.

6. Dynamisch adressierbare Slave-Einheit (2) nach einem der vorangehenden Ansprüche, die zwei oder mehrere Busschnittstellen (11) aufweist.

7. Dynamisch adressierbare Slave-Einheit (2) nach Anspruch 6, bei der die Steueranschlüsse (12) jeweils in eine der Busschnittstellen (11) integriert sind.

8. Master-Einheit (1) zur Verwendung mit einer oder mehreren dynamisch adressierbaren Slave-Einheiten (2) nach einem der Ansprüche 1 bis 7, umfassend
einen Steueranschluss, der dazu ausgelegt ist, über eine Steuerleitung mit einem der beiden Steueranschlüsse (12) einer der Slave-Einheiten (2) verbunden zu werden; und
eine Busschnittstelle (11), die dazu ausgelegt ist, über eine Busleitung (3) mit der Busschnittstelle (11) einer der Slave-Einheiten (2) verbunden zu werden;
wobei die Master-Einheit (1) dazu ausgelegt ist, den Slave-Einheiten (2) nacheinander eine Adresse zuzuweisen, indem sie am Steueranschluss (12) ein Steuersignal und an der Busschnittstelle (11) abwechselnd ein Adressierungssignal zur Zuweisung einer Adresse an eine der Slave-Einheiten (2) und ein an die zuletzt zugewiesene Adresse gerichtetes Schaltsignal bereitstellt.

9. Master-Einheit (1) nach Anspruch 8, die dazu ausgelegt ist, zwischen einem Adressierungssignal und einem Schaltsignal ein an die zuletzt zugewiesene Adresse gerichtetes Abfragesignal an der Busschnittstelle (11) bereitzustellen, um die Vergabe der zuletzt zugewiesenen Adresse zu überprüfen.

10. Master-Einheit (1) nach Anspruch 8 oder 9, bei dem es sich bei dem Adressierungssignal um eine an alle Slave-Einheiten (2) des Bussystems gerichtete Broadcast-Nachricht handelt.

11. Master-Einheit (1) nach einem der Ansprüche 8 bis 10, die als Steuersignal so lange' ein Gleichspannungssignal an den Steueranschluss (12) anlegt, bis die letzte zu adressierende Slave-Einheit (2) adressiert und ihr Schalter (13a) umgeschaltet wurde.

12. Master-Einheit (1) nach einem der Ansprüche 8 bis 11, bei dem die Master-Einheit (1) den Adressiervorgang beendet, wenn bei einer Suchabfrage keine unadressierte Slave-Einheit (2) gefunden wird.

13. Verfahren zum dynamischen Adressieren von Slave-Einheiten (2) nach einem der Ansprüche 1 bis 7, umfassend:
Bereitstellen eines Steuersignals durch eine Master-Einheit (1) auf einer Steuerleitung, die fortlaufend über deren jeweilige Steueranschlüsse (12) durch die Slave-Einheiten (2) durchgeschleift ist;
Senden eines Adressierungssignals durch die Master-Einheit (1), das einer freigegebenen Slave-Einheit (2) eine Adresse zuweist, auf einer Busleitung (3), die mit den Busschnittstellen (11) der Slave-Einheiten (2) verbunden ist;
nach dem Senden des Adressierungssignals, Senden eines an die im vorigen Schritt zugewiesene Adresse gerichteten Schaltsignals durch die Master-Einheit (1) auf der Busleitung (3);
Wiederholen der beiden letzten Schritte, bis die letzte zu adressierende Slave-Einheit (2) adressiert wurde.

14. Verfahren nach Anspruch 13, umfassend das Bereitstellen eines Abfragesignals durch die Master-Einheit (1) auf der Busleitung (3) zwischen einem Adressierungssignal und einem Schaltsignal, wobei durch das Abfragesignal die Vergabe der zuletzt zugewiesenen Adresse überprüft wird.

## Claims

1. A dynamically addressable slave unit (2), comprising a bus interface (11),
a release circuit (10) with a switch (13a),
two control connections (12) which are connected by way of the switch (13a) of the release circuit (10), wherein the release circuit (10) is designed in order to release the slave unit (2) for assigning an address by an address signal provided at the bus interface (11) only when a control signal is provided at one of the control connections (12) and when the switch (13a) of the release circuit (10) is open, and wherein the release circuit (10) is designed in order to lock the slave unit (2) otherwise for assigning an address,
**characterized in that** the slave unit (2) is designed in order to close the switch (13a) in a manner dependent upon a switching signal provided at the bus interface (11) and directed to the address assigned to the slave unit (2),
wherein the release circuit (10) comprises an evaluation circuit with a release input (14), wherein the state of the release input (14) is dependent upon whether a control signal is provided at one of the control connections (12) and whether the switch (13a) of the release circuit (10) is open or closed, and wherein the evaluation circuit determines in a manner dependent upon the state of the release input (14) whether the slave unit (2) is released or locked for addressing purposes.

2. A dynamically addressable slave unit (2) according to claim 1, in which the release circuit (10) comprises a switching arrangement which allows a release of the slave unit (2) for the assignment of an address by the release circuit (10) irrespectively of which of the two control connections (12) at which the control signal is provided.

3. A dynamically addressable slave unit (2) according to one of claims 1 or 2, in which the release input (14) is separated galvanically from the control connections (12).

4. A dynamically addressable slave unit (2) according to any one of the preceding claims, wherein the evaluation circuit is a micro-controller.

5. A dynamically addressable slave unit (2) according to any one of the preceding claims, in which the release circuit (10) is designed in such a way that a control signal present at one of the control connections (12) is also present at the release input (14) of the evaluation circuit when the switch (13a) is opened, but not when the switch (13a) is closed.

6. A dynamically addressable slave unit (2) according to any one of the preceding claims, which has two or more bus interfaces (11).

7. A dynamically addressable slave unit (2) according to claim 6, in which the control connections (12) are incorporated into one of the bus interfaces (11) in each case.

8. A master unit (1) for use with one or more dynamically addressable slave units (2) according to any one of claims 1 to 7, comprising
a control connection which is designed in order to be connected by way of a control line to one of the two control connections (12) of one of the slave units (2), and
a bus interface (11) which is designed in order to be connected by way of a bus line (3) to the bus interface (11) of one of the slave units (2), wherein the master unit (1) is designed in order to assign an address to the slave units (2) in succession, in that at the control connection (12) it prepares a control signal and at the bus interface (11) it prepares alternately an address signal for the assignment of an address to one of the slave units (2) and a switching signal directed to the address assigned last.

9. A master unit (1) according to claim 8, which is designed in order to prepare an interrogation signal directed to the address assigned last at the bus interface (11) between an address signal and a switching signal, in order to test the allocation of the address assigned last.

10. A master unit (1) according to claim 8 or 9, in which the address signal is a broadcast report directed to all the slave units (2) of the bus system.

11. A master unit (1) according to any one of claims 8 to 10, which applies a direct-voltage signal as a control signal to the control connection (12) until the last slave unit (2) to be addressed has been addressed and the switch (13a) thereof has been switched over.

12. A master unit (1) according to any one of claims 8 to 11, in which the master unit (1) terminates the addressing procedure if a non-addressed slave unit (2) is not found in a search.

13. A method of dynamically addressing slave units (2) according to any one of claims 1 to 7, comprising preparing a control signal through a master unit (1) on a control line which is continuously looped through the slave units (2) by way of its respective the control connections (12),
sending an address signal through the master unit (1), which address signal assigns an address to a released slave unit (2), on a bus line (3) which is connected to the bus interfaces (11) of the slave units (2), after sending the address signal, sending a switching signal directed to the address assigned in the previous step through the master unit (1) on the bus line (3),
repeating the last two steps until the last slave unit (2) to be addressed has been addressed.

14. A method according to claim 13, comprising the preparation of an interrogation signal by the master unit (1) on the bus line (3) between an address signal and a switching signal, wherein the allocation of the address assigned last is tested by the interrogation signal.

## Revendications

1. Unité esclave à adressage dynamique (2), comprenant :
une interface de bus (11) ;
un circuit de libération (10) avec un interrupteur (13a) ;
deux raccords de commande (12), qui sont raccordés au circuit de libération (10) par l'intermédiaire de l'interrupteur (13a) ;
dans laquelle le circuit de libération (10) est conçu de façon à ne libérer l'unité esclave (2) pour l'attribution d'une adresse par un signal d'adressage fourni à l'interface de bus (11) que lorsqu'un signal de commande est présent à un des raccords de commande (12) et lorsque l'interrupteur (13a) du circuit de libération (10) est ouvert ; et
dans laquelle le circuit de libération (10) est conçu de façon à bloquer par ailleurs l'unité esclave (2) pour l'attribution d'une adresse ;
**caractérisée en ce que** l'unité esclave (2) est conçue de façon à fermer l'interrupteur (13a) en fonction d'un signal de commutation présent à l'interface de bus (11) et destiné à l'adresse attribuée à l'unité esclave (2) ;
dans laquelle le circuit de libération (10) comprend un circuit d'évaluation avec une entrée de libération (14), dans laquelle l'état de l'entrée de libération (14) dépend du fait qu'un signal de commande est ou non présent à un des raccords de commande (12) et du fait que l'interrupteur (13a) du circuit de libération (10) est ouvert ou fermé, et dans laquelle le circuit d'évaluation constate, en fonction de l'état de l'entrée de libération (14), si l'unité esclave (2) est libérée ou bloquée pour un adressage.

2. Unité esclave à adressage dynamique (2) selon la revendication 1, dans laquelle le circuit de libération (10) comprend un dispositif de commutation, qui permet qu'une libération de l'unité esclave (2) pour l'attribution d'une adresse soit produite par le circuit de libération (10) indépendamment de celui des deux raccords de commande (12) auquel le signal de commande est présent.

3. Unité esclave à adressage dynamique (2) selon l'une quelconque des revendications 1 ou 2, dans laquelle l'entrée de libération (14) est électriquement séparée des raccords de commande (12) par galvanisation.

4. Unité esclave à adressage dynamique (2) selon l'une quelconque des revendications précédentes, dans laquelle le circuit d'évaluation est un micro-contrôleur.

5. Unité esclave à adressage dynamique (2) selon l'une quelconque des revendications précédentes, dans laquelle le circuit de libération (10) est conçu de telle manière qu'un signal de commande présent à un des raccords de commande (12) soit également présent à l'entrée de libération (14) du circuit d'évaluation lorsque l'interrupteur (13a) est ouvert, mais ne le soit pas lorsque l'interrupteur (13a) est fermé.

6. Unité esclave à adressage dynamique (2) selon l'une quelconque des revendications précédentes, qui présente deux ou plusieurs interfaces de bus (11).

7. Unité esclave à adressage dynamique (2) selon la revendication 6, dans laquelle les raccords de commande (12) sont respectivement intégrés dans une des interfaces de bus (11).

8. Unité maître (1) à utiliser avec une ou plusieurs unités esclaves à adressage dynamique (2) selon l'une quelconque des revendications 1 à 7, comprenant
un raccord de commande, qui est conçu de façon à être raccordé par une ligne de commande à un des deux raccords de commande (12) d'une des unités esclaves (2) ; et
une interface de bus (11), qui est conçue de façon à être raccordée par une ligne de bus (3) à l'interface de bus (11) d'une des unités esclaves (2) ;
dans laquelle l'unité maître (1) est conçue de façon à attribuer une adresse aux unités esclaves (2) l'une après l'autre, en fournissant au raccord de commande (12) un signal de commande et à l'interface de bus (11) alternativement un signal d'adressage pour l'attribution d'une adresse à une des unités esclaves (2) et un signal de commutation destiné à la dernière adresse attribuée.

9. Unité maître (1) selon la revendication 8, qui est conçue de façon à envoyer à l'interface de bus (11), entre un signal d'adressage et un signal de commutation, un signal d'interrogation destiné à la dernière adresse attribuée, afin de vérifier l'octroi de la dernière adresse attribuée.

10. Unité maître (1) selon la revendication 8 ou 9, dans laquelle le signal d'adressage est un avis de diffusion destiné à toutes les unités esclaves (2) du système de bus.

11. Unité maître (1) selon l'une quelconque des revendications 8 à 10, qui applique un signal en tension continue au raccord de commande (12) comme signal de commande jusqu'à ce que la dernière unité esclave (2) à adresser ait été adressée et que son interrupteur (13a) ait été commuté.

12. Unité maître (1) selon l'une quelconque des revendications 8 à 11, dans laquelle l'unité maître (1) termine le processus d'adressage, lorsqu'aucune unité esclave non adressée (2) n'est trouvée lors d'une interrogation de recherche.

13. Procédé pour l'adressage dynamique d'unités esclaves (2) selon l'une quelconque des revendications 1 à 7, comprenant les étapes suivantes:
fournir un signal de commande par une unité maître (1) sur une ligne de commande, qui est bouclé en continu par les unités esclaves (2) par l'intermédiaire de leurs raccords de commande respectifs (12) ;
envoyer un signal d'adressage par l'unité maître (1), lequel attribue une adresse à une unité esclave libérée (2), sur une ligne de bus (3) qui est raccordée aux interfaces de bus (11) des unités esclaves (2) ;
après l'envoi du signal d'adressage, envoyer un signal de commutation destiné à l'adresse attribuée à l'étape précédente, par l'unité maître (1) sur la ligne de bus (3) ;
répéter les deux dernières étapes, jusqu'à ce que la dernière unité esclave à adresser (2) ait été adressée.

14. Procédé selon la revendication 13, comprenant la fourniture d'un signal d'interrogation par l'unité maître (1) sur la ligne de bus (3), entre un signal d'adressage et un signal de commutation, dans lequel on vérifie à l'aide du signal d'interrogation l'octroi de la dernière adresse attribuée.
